# FASCICULE DE BREVET EUROPEEN

(11) **EP 3 927 276 B1**
(45) Date de publication et mention de la délivrance du brevet: **11.01.2023**
(21) Numéro de dépôt: 20714673.9
(22) Date de dépôt: 24.02.2020
(51) Int. Cl.: A61C 7/00

(54) **PROCÉDÉ D'ESTIMATION ET DE VISUALISATION D'UN RÉSULTAT D'UN PLAN DE TRAITEMENT DENTAIRE**
VERFAHREN ZUR ABSCHÄTZUNG UND BEOBACHTUNG EINES ERGEBNISSES EINES ZAHNÄRZTLICHEN BEHANDLUNGSPLANES
METHOD FOR ESTIMATING AND VIEWING A RESULT OF A DENTAL TREATMENT PLAN

(30) Priorité: 22.02.2019 FR 1901837; 22.03.2019 FR 1903007
(43) Date de publication de la demande: 29.12.2021
(73) Titulaire: Deepsmile Technology, 13100 Aix En Provence (FR)
(72) Inventeur: BEN-HAMADOU, Achraf, 95100 Argenteuil (FR); REKIK, Ahmed, Tunisie, 3021 (TN); SETBON, Hugo, 1180 Uccle (BE)
(74) Mandataire: Cornuejols, Marine Sophie
(86) Numéro de dépôt international: PCT/FR2020/050348
(87) Numéro de publication internationale: WO 2020/169939

(56) Documents cités:
- US-A1- 2010 179 789
- US-A1- 2018 125 610
- US-A1- 2018 174 367

## Description

### DOMAINE TECHNIQUE DE L'INVENTION

La présente invention vise un procédé d'estimation et de visualisation d'un résultat d'un plan de traitement dentaire. Elle s'applique, notamment, au domaine de l'orthodontie et de la prosthétique dentaire et vise, en particulier, l'estimation du résultat et la visualisation d'un plan de traitement.

### ÉTAT DE LA TECHNIQUE

Aujourd'hui, lorsqu'un traitement dentaire doit être réalisé sur un patient, les solutions actuelles ne permettent pas de déterminer en avance l'impact sur le visage du patient. Ainsi, aucun critère esthétique n'est aujourd'hui pris en compte dans l'établissement d'un plan de traitement dentaire.

Pour déterminer un plan de traitement, un praticien utilise un scanner intra-oral afin de déterminer la position des dents et la structure globale de la dentition. Le résultat de cette capture est ensuite transmis à un centre d'analyse qui fournit, en retour, un plan de traitement et une visualisation de la dentition post-traitement. Cet aller-retour est long, de l'ordre de plusieurs semaines, et nécessite une main-d'œuvre humaine importante et qualifiée pour réaliser cette visualisation. De plus, les plans de traitement suggérés sont rarement suivis, car cliniquement imparfaits. L'une des raisons de cette imperfection tient au fait que l'impact du plan de traitement sur les tissus mous n'est pas pris en compte. Cette absence de prise en compte conduit à un impact inconnu du plan de traitement sur le visage d'un patient.

Ainsi, il n'existe pas aujourd'hui de solution permettant de déterminer automatiquement un plan de traitement dentaire en fonction d'un résultat à atteindre, ce résultat prenant en compte une préférence et l'impact esthétique sur le visage du patient.

On connaît notamment des systèmes tels que décrits dans la demande de brevet US 2018/174367. Un tel système vise à fournir un modèle virtuel de dentition affichable, notamment en réalité augmentée par superposition sur un flux vidéo de la mâchoire d'un utilisateur.

De tels systèmes utilisent uniquement les dents pour déterminer le résultat final d'un traitement, ce qui rend la prédiction de résultat très incertaine et peu fiable.

De tels systèmes utilisent la détection du visage pour déterminer un plan de symétrie en deux dimensions permettant de positionner le modèle de dentition modélisé, sans adaptation du modèle avec la forme particulière du visage de l'utilisateur.

De tels systèmes se limitent à la superposition d'un modèle virtuel de dentition sur un flux d'image réel capté, il en résulte un rendu peu fiable et enclin à des erreurs d'affichage dues à l'affichage simultané du flux réel et du flux virtuel de dentition.

On connaît également des systèmes tels que décrits dans la demande de brevet US 2018/263733. De tels systèmes visent à afficher, sur le visage d'un utilisateur, une dentition modifiée en fonction d'un traitement réalisé.

De tels systèmes utilisent une image en deux dimensions du visage pour déterminer l'impact d'un plan de traitement, ce qui rend la prédiction de résultat très incertaine et peu fiable car de nombreuses positions de repères anatomiques son mal définies, telles le bout du nez par exemple.

De tels systèmes utilisent le visage uniquement pour positionner un rendu virtuel des dents.

De tels systèmes utilisent un alignement rigide (rotation, translation).

De tels systèmes analysent le visage uniquement en deux dimensions.

### EXPOSÉ DE L'INVENTION

La présente invention vise à remédier à tout ou partie de ces inconvénients. L'invention est définie par les revendications annexées.

À cet effet, la présente invention vise un procédé d'estimation et de visualisation d'un résultat d'un plan de traitement dentaire, qui comporte :
- une étape de positionnement d'écarteurs dans la bouche d'un patient ;
- une étape de reconstruction, dans un premier espace virtuel en trois dimensions de la forme du visage du patient, comportant :
   - une première étape de capture, par un capteur RGB-D, d'au moins une image du visage du patient et
   - une première étape d'approximation de la forme d'au moins une partie du visage du patient par rapport à un modèle paramétrique de forme de visage en fonction d'au moins une image du visage captée,
- une étape de reconstruction, dans un deuxième espace virtuel en trois dimensions, de la dentition d'un patient, comportant :
   - une étape de capture, par un capteur, d'une image de la dentition du patient,
   - une étape de calcul d'une carte probabiliste de contours d'au moins une dent de la dentition en fonction d'au moins une image captée et
   - une étape de modélisation de la forme en trois dimensions d'au moins une dent en fonction d'une position probable d'au moins un contours,
- une étape d'assemblage de la forme du visage reconstruite et de la dentition reconstruite dans un espace virtuel en trois dimensions commun,
- une étape de retrait des écarteurs de la bouche du patient,
- une deuxième étape de capture d'une image de la forme du visage du patient,
- une deuxième étape d'approximation de la forme du visage du patient par rapport à un modèle paramétrique de forme de visage en fonction d'au moins une image du visage captée au cours de la deuxième étape de capture, dans un espace en trois dimensions,
- une étape de positionnement de la dentition modélisée dans l'espace virtuel en trois dimensions de la forme du visage approximée au cours de la deuxième étape d'approximation,
- une étape de détermination d'au moins un plan de traitement dentaire en fonction à la fois de la dentition et de la forme du visage modélisés,
- une étape de sélection d'un plan de traitement parmi l'ensemble des plans de traitement déterminés,
- une étape de calcul d'une image du visage du patient post-traitement dentaire en fonction de l'image du visage du patient captée au cours de la deuxième étape de capture et du plan de traitement sélectionné et
une étape d'affichage de l'image calculée.

Grâce à ces dispositions, le patient peut visualiser l'impact d'un plan de traitement sur la forme de son visage et ainsi choisir, en fonction de critères esthétiques, s'il souhaite ou non réaliser ce plan de traitement. De plus, le praticien peut ainsi obtenir, instantanément, le plan de traitement à réaliser pour atteindre le résultat affiché. De plus, ces dispositions permettent de voir l'impact en direct d'un changement de plan de traitement.

Ce procédé présente, de plus, un avantage clair de fiabilité de la prédiction réalisée en raison de l'utilisation du visage comme paramètre de modélisation et non pas uniquement pour servir de point de référence à un affichage d'une dentition modélisée de manière autonome.

Dans des modes de réalisation, le procédé objet de la présente invention comporte une étape d'apprentissage automatique de la reconnaissance d'un repère anatomique en fonction d'au moins une image captée, l'étape de détection étant réalisée en fonction de l'apprentissage automatique réalisé.

Ces modes de réalisation permettent d'améliorer considérablement la détection d'un repère anatomique par l'apprentissage, sur des images captées préalablement, de la manière d'identifier ces repères.

Dans des modes de réalisation, le procédé objet de la présente invention comporte une étape d'apprentissage automatique de la reconnaissance d'une dent en fonction d'au moins une image captée, l'étape de détection étant réalisée en fonction de l'apprentissage automatique réalisé.

Ces modes de réalisation permettent d'améliorer considérablement la détection de la forme d'une dent par l'apprentissage, sur des images captées préalablement, de la manière d'identifier ces formes de dents à partir d'un ensemble de points captés.

Dans des modes de réalisation, l'étape d'apprentissage automatique de la reconnaissance d'une dent est configurée pour réaliser un apprentissage d'une distribution statistique de formes de dent à partir de scans en trois dimensions captés de dents pour produire un modèle paramétrique de forme de dent.

Dans des modes de réalisation, l'étape d'affichage est réalisée en réalité augmentée, le procédé comportant, en amont de l'étape d'affichage, une étape de diminution d'une partie du visage d'un utilisateur capté dans un flux d'images.

Ces modes de réalisation améliorent l'ergonomie et la facilité de visualisation de l'impact d'un plan de traitement sur le visage du patient.

Dans des modes de réalisation, le procédé objet de la présente invention comporte une étape de positionnement d'un écarteur dans la bouche du patient en amont de l'étape de reconstruction de la dentition dudit patient.

Ces modes de réalisation permettent d'obtenir une meilleure capture d'image de la dentition, améliorant ainsi la capacité de détection de la forme des dents d'une dentition.

Dans des modes de réalisation, le procédé objet de la présente invention comporte une étape de positionnement de miroirs dans la bouche du patient en amont de l'étape de reconstruction de la dentition dudit patient.

Ces modes de réalisation permettent d'obtenir une meilleure capture d'image de la dentition, particulièrement des molaires, améliorant ainsi la capacité de détection de la forme des molaires d'une dentition.

Dans des modes de réalisation, au cours de l'étape de capture d'au moins une image d'un objet représentatif de la dentition du patient, au moins une image captée est en deux dimensions.

Ces modes de réalisation permettent de mettre en œuvre un capteur d'images à faibles coûts.

Dans des modes de réalisation, au cours de l'étape de capture d'au moins une image de la forme du visage du patient, au moins une image captée est en deux dimensions.

Ces modes de réalisation permettent de mettre en œuvre un capteur d'images à faibles coûts.

Dans des modes de réalisation, l'image captée au cours de l'étape de capture d'au moins une image d'au moins une dent du patient est une image d'une empreinte des dents du patient.

Ces modes de réalisation permettent de mettre en œuvre un capteur d'images à faibles coûts.

Dans des modes de réalisation, le procédé objet de la présente invention comporte une étape de fourniture, en fonction du plan de traitement choisi, d'un calendrier d'actions à réaliser.

Ces modes de réalisation permettent au praticien de proposer un calendrier correspondant au plan d'action sélectionné au patient.

Dans des modes de réalisation, la deuxième étape de détection est réalisée en fonction de l'approximation paramétrique de la forme d'une dent captée par rapport à une distribution de formes de dents obtenues préalablement.

Dans des modes de réalisation, la deuxième étape de capture capte au moins une image en deux dimensions d'une dent selon un angle de prise de vue, la deuxième étape de détection réalisant l'approximation paramétrique de la forme d'une dent en selon une projection correspondant à l'angle de prise de vue.

Dans des modes de réalisation, le procédé objet de la présente invention comporte une étape d'apprentissage automatique d'une distribution statistique de formes de dent à partir de scans en trois dimensions captés de dents pour produire un modèle paramétrique de forme de dent.

Dans des modes de réalisation, l'étape de détection produit une cartographie probabiliste d'appartenance d'un contour à un ensemble anatomique.

### BRÈVE DESCRIPTION DES FIGURES

D'autres avantages, buts et caractéristiques particulières de l'invention ressortiront de la description non limitative qui suit d'au moins un mode de réalisation particulier du procédé objet de la présente invention, en regard des dessins annexés, dans lesquels :
- la figure 1 représente, schématiquement, et sous forme d'un logigramme, une succession d'étapes particulière d'un premier mode de réalisation du procédé objet de la présente invention,
- la figure 2 représente, schématiquement, et sous forme d'un logigramme, une succession d'étapes particulière d'un premier mode de réalisation du procédé objet de la présente invention,
- la figure 3 représente, schématiquement, une première étape de capture d'une image du visage d'un patient du procédé objet de la présente invention,
- la figure 4 représente, schématiquement, une étape de capture d'une image d'au moins une dent d'un patient du procédé objet de la présente invention,
- la figure 5 représente, schématiquement, une étape d'assemblage d'une forme du visage modélisée et d'une dentition modélisée du procédé objet de la présente invention,
- la figure 6 représente, schématiquement, une deuxième étape de capture d'une image du visage d'un patient du procédé objet de la présente invention et
- la figure 7 représente, schématiquement, une étape de positionnement d'une dentition modélisée dans un repère correspondant à une forme de visage captée.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

On note que le terme « capteur » peut désigner un capteur ou une pluralité de capteurs synchrones ou asynchrones.

On note que le terme « image » peut se référer à une image en deux dimensions, à une image en trois dimensions, à une image issue d'un scan en trois dimensions ou à une vidéo plus généralement.

On note que les termes « reconstruction » et « modélisation » sont équivalents en ce qu'ils désignent la transposition dans un espace virtuel en trois dimensions d'un objet réel.

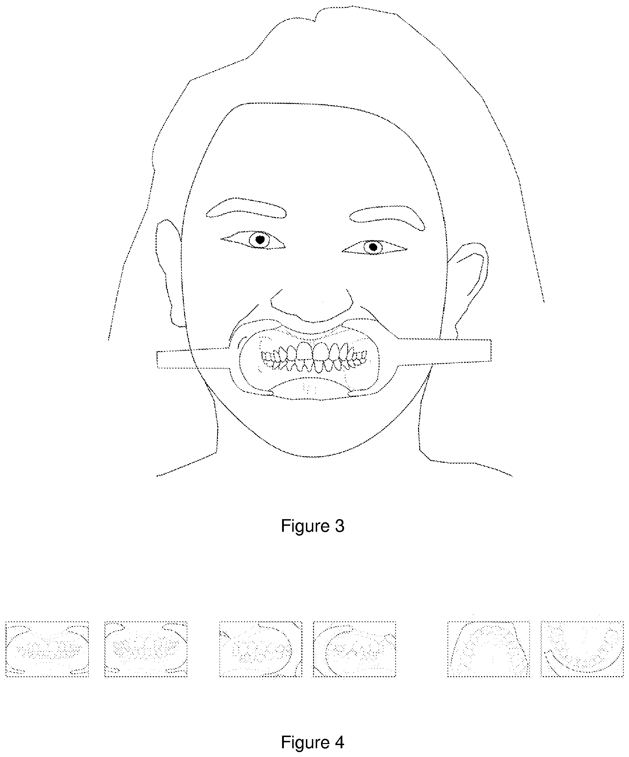

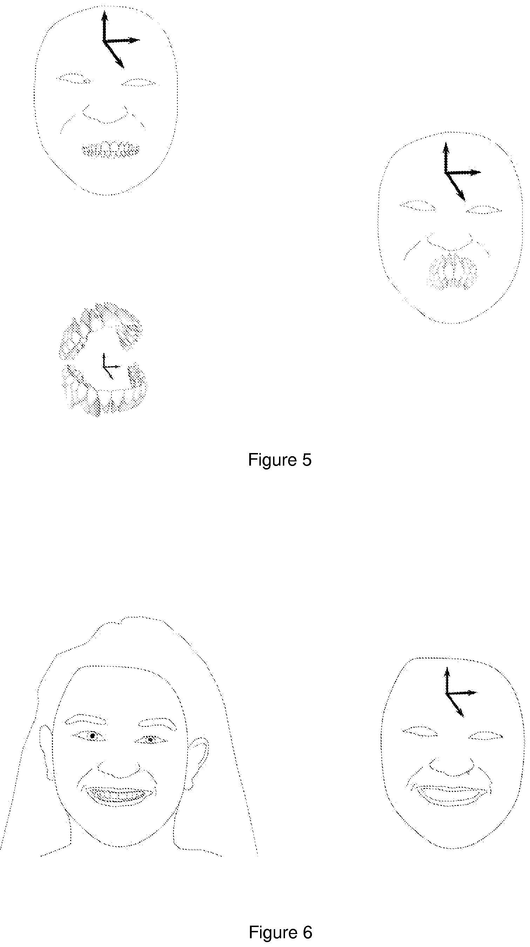

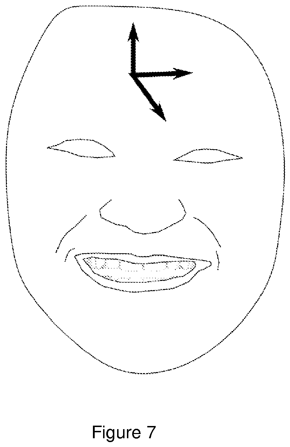

Dans un mode préférentiel de réalisation, on comprend conceptuellement que le procédé objet de la présente invention comporte les étapes de :
- capture d'une image du visage du patient avec des écarteurs dans la bouche et avec la dentition fermée, comme représenté en figure 3,
- capture d'une pluralité d'images de la dentition du patient avec des écarteurs dans la bouche et avec la dentition fermée puis ouverte, comme représenté en figure 4,
- modélisation paramétrique de la forme du visage, incluant la modélisation des surfaces de la partie supérieure du visage, tel le front ou le nez, dans un premier repère, comme représenté en figure 5,
- modélisation paramétrique de la forme des dents et modélisation de la dentition, dans un deuxième repère, comme représenté en figure 5,
- assemblage des formes de visage et des dents modélisés, comme représenté en figure 5,
- capture d'une image du visage du patient sans écarteurs et préférentiellement en train de sourire, comme représenté en figure 6,
- approximation d'une modélisation du visage capté sans écarteurs avec la modélisation résultant de la capture de l'image avec écarteurs, comme représenté en figure 6 et
- assemblage d'une dentition dans le repère du visage sans écarteur,
- détermination d'un plan de traitement,
- calcul d'une image post plan de traitement dans l'image modélisée du visage du patient, comme représenté en figure 7 et
- affichage du résultat dans une image du visage du patient.

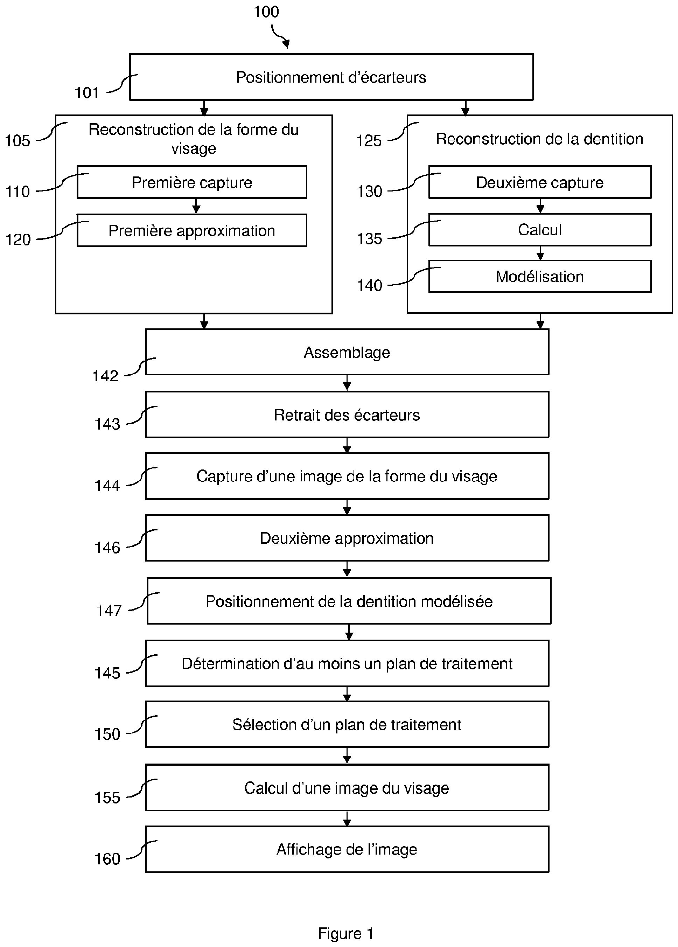

On observe, sur la figure 1, qui n'est pas à l'échelle, une vue schématique d'un mode de réalisation du procédé 100 objet de la présente invention. Ce procédé 100 d'estimation et de visualisation d'un résultat d'un plan de traitement dentaire, comporte :
- une étape 101 de positionnement d'écarteurs dans la bouche d'un patient ;
- une étape 105 de reconstruction, dans un premier espace virtuel en trois dimensions de la forme du visage du patient, comportant :
   - une première 110 étape de capture, par un capteur RGB-D, d'au moins une image du visage du patient et
   - une première étape 120 d'approximation de la forme du visage du patient par rapport à un modèle paramétrique de forme d'au moins une partie du visage en fonction d'au moins une image du visage captée,
- une étape 125 de reconstruction, dans un deuxième espace virtuel en trois dimensions, de la dentition d'un patient, comportant :
   - une étape 130 de capture, par un capteur, d'une image de la dentition du patient,
   - une étape 135 de calcul d'une carte probabiliste de contours d'au moins une dent de la dentition en fonction d'au moins une image captée et
   - une étape 140 de modélisation de la forme en trois dimensions d'au moins une dent en fonction d'une position probable d'au moins un contours,
- une étape 142 d'assemblage de la forme du visage reconstruite et de la dentition reconstruite dans un espace virtuel en trois dimensions commun,
- une étape 143 de retrait des écarteurs de la bouche du patient,
- une deuxième étape 144 de capture d'une image de la forme du visage du patient,
- une deuxième étape 146 d'approximation de la forme du visage du patient par rapport à un modèle paramétrique de forme de visage en fonction d'au moins une image du visage captée au cours de la deuxième étape de capture, dans un espace en trois dimensions,
- une étape 147 de positionnement de la dentition modélisée dans l'espace virtuel en trois dimensions de la forme du visage approximée au cours de la deuxième étape d'approximation,
- une étape 145 de détermination d'au moins un plan de traitement dentaire en fonction à la fois de la dentition et de la forme du visage modélisés,
- une étape 150 de sélection d'un plan de traitement parmi l'ensemble des plans de traitement déterminés,
- une étape 155 de calcul d'une image du visage du patient post-traitement dentaire en fonction de l'image du visage du patient captée au cours de la deuxième étape de capture et du plan de traitement sélectionné et
- une étape 160 d'affichage de l'image calculée.

L'étape 101 de positionnement d'écarteurs peut être réalisée par un opérateur de sorte à rendre au moins une partie de la dentition du patient visible.

L'étape 143 de retrait d'écarteurs peut être réalisée par un opérateur.

Dans des variantes, la première étape 110 de capture est réalisée, par exemple, par la mise en œuvre d'un capteur d'image. Ce capteur d'image est, par exemple, un appareil photographique ou une caméra de capture de vidéos. Tout capteur d'image connu de l'Homme du Métier peut être employé ici. Par exemple, l'utilisation d'un terminal mobile de poche (en anglais, « smartphone ») muni d'un appareil photo permet la réalisation de cette étape 110 de capture. Dans des variantes, un capteur RGB-D (pour « Red Green Blue - Depth », traduit par « Rouge Vert Bleu - Profondeur »), capable de capter à la fois la couleur et la valeur de profondeur de chaque pixel d'un objet photographié, est utilisé.

Préférentiellement, le capteur est positionné en face du visage du patient dont la forme du visage doit être reconstruite en trois dimensions.

Dans des variantes, une pluralité d'images est captée. Dans des variantes, au moins deux images captées sont captées selon un angle différent par rapport au visage du patient. Dans des variantes, au moins une partie d'une pluralité d'images est captée selon un arc de cercle entourant le visage du patient.

Dans des variantes, le capteur capte uniquement des photographies. Dans des variantes, le capteur capte uniquement des vidéos. Dans des variantes, le capteur capte une combinaison de photographies et de vidéos.

La multiplication des angles de vue permet d'augmenter la fiabilité de la modélisation de la forme du visage en trois dimensions. Dans des variantes préférentielles, trois images sont ainsi captées.

Dans des modes de réalisation, au cours de l'étape 110 de capture d'au moins une image de la forme du visage du patient, au moins une image captée est en deux dimensions. Ces modes de réalisation rendent plus complexe l'étape 120 d'approximation de la forme du visage en trois dimensions, mais permettent l'utilisation de capteurs moins onéreux et plus largement disponibles.

La première étape 115 de détection est réalisée, par exemple, par la mise en œuvre d'un circuit électronique de calcul, tel un ordinateur ou un serveur, configuré pour, à partir d'au moins une image captée, détecter au moins un repère anatomique.

On appelle « repère anatomique », par exemple, la glabelle, le philtrum, le bout du nez, les coins des yeux, les lèvres et le menton.

Certains de ces repères anatomiques, par exemple le menton ou le coin des yeux et les lèvres, sont bien définis sur des images en deux dimensions et peuvent ainsi être reconnus via des algorithmes de reconnaissance de formes sur des images en deux dimensions. Toutefois, certains repères anatomiques sont au contraire caractérisés par des formes géométriques en trois dimensions, tels le menton ou le bout du nez. Ainsi, l'utilisation d'un capteur d'images en trois dimensions est naturellement indiquée sur le plan technique pour faciliter la reconnaissance desdits repères.

Toutefois, dans des variantes préférentielles, le choix d'un capteur d'images en deux dimensions est préféré en dépit de cette contre-indication technique, pour des raisons de coût et d'accessibilité du capteur notamment.

Dans certains systèmes actuels, le protocole mis en œuvre par un praticien dentiste consiste à prélever à la main sur des photographies des repères anatomiques pour en déduire des mesures en trois dimensions en utilisant, par exemple, un pied à coulisse ou une démarche équivalente. Cette procédure est consommatrice de temps et ne prend pas en compte la vraie géométrie/forme du visage.

Pour identifier un repère anatomique à partir d'au moins une image en deux dimensions, de manière automatique, un algorithme de traitement d'images peut être mis en œuvre, cet algorithme étant configuré pour reconnaître un motif déterminé et associer, à ce motif, un type de repère anatomique.

Dans des variantes, au moins une image ainsi utilisée présente une information de profondeur associée à chaque pixel capté. Chaque telle image est captée, par exemple, par un capteur RGB-D.

Dans des variantes, au moins deux images en deux dimensions sont captées et une interpolation réalisée pour associer à un pixel représentatif d'une même partie du visage des coordonnées dans un repère géométrique virtuel, par triangulation par exemple.

Dans d'autres variantes, la reconstruction en trois dimensions de la forme du visage du patient est réalisée selon la méthode décrite dans le document « Monocular 3D facial shape reconstruction from a single 2D image with coupled-dictionary learning and sparse coding » des auteurs Pengfei Dou, Yuhang Wu, Shishir K. Shah et loannis A ; Kakadiaris, publié dans la revue « Pattern Récognition », Volume 81, septembre 2018, pages 515-527.

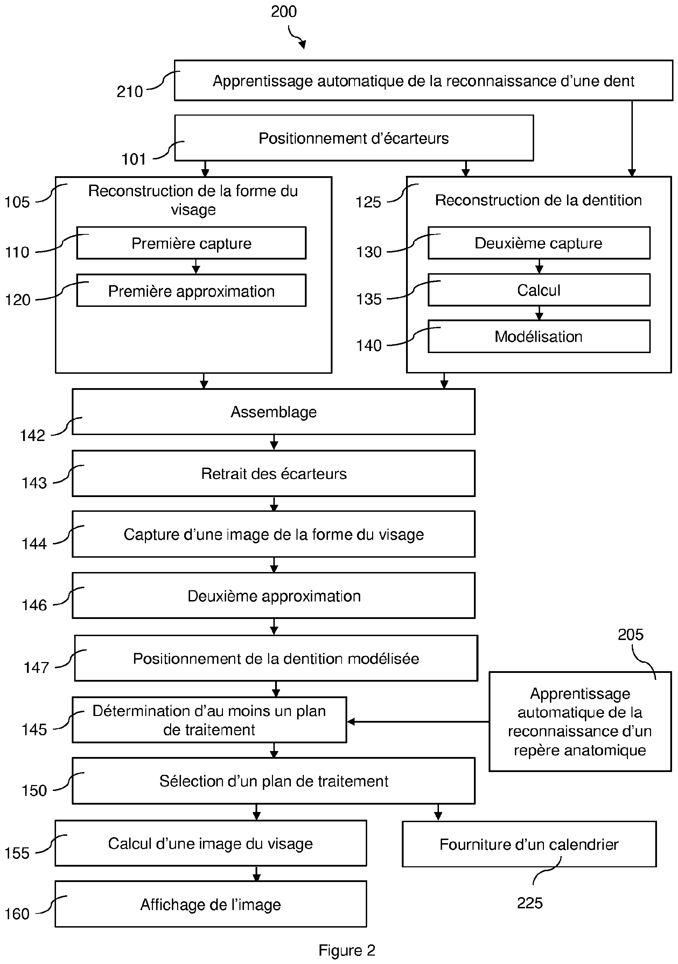

Dans des modes de réalisation, tel que celui représenté en figure 2, le procédé 200 comporte une étape 205 d'apprentissage automatique de la reconnaissance d'un repère anatomique en fonction d'au moins une image captée, l'étape 115 de détection étant réalisée en fonction de l'apprentissage automatique réalisé.

L'étape 205 d'apprentissage est réalisée, par exemple, par la mise en œuvre d'un algorithme d'apprentissage automatique (« machine learning » en anglais) sur la base d'un échantillon d'images captées représentant des repères anatomiques déterminés.

L'étape 120 d'approximation est réalisée, par exemple, par la mise en œuvre d'un circuit électronique de calcul, tel un ordinateur ou serveur, configuré pour, à partir des repères anatomiques détectés, calculer une forme du visage dans un repère géométrique virtuel.

Par exemple, au cours de cette étape 120 d'approximation, au moins un repère anatomique est positionné selon le repère géométrique, la forme du visage étant extrapolée, ou interpolée, à partir des coordonnées de chaque dit repère. En guise d'exemple, si les coordonnées de la base des narines et les coordonnées du pourtour des lèvres sont connues, la forme du philtrum ou de la gouttière nasale peut être déterminée selon un modèle mathématique de sorte à relier les coordonnées de la base des narines et les coordonnées du pourtour des lèvres.

Dans des variantes, cette étape 120 d'approximation est réalisée selon la méthode décrite dans le document « A Multiresolution 3D Morphable Face Model and Fitting Framework », publié en 2015, des auteurs Huber, Patrik & Hu, Guosheng & Tena, Rafael & Mortazavian, Pouria & Koppen, W.P. & J. Christmas, William & Rätsch, Matthias & Kittler, Josef.

Dans des modes de réalisation particuliers, tel que celui représenté en figure 2, le procédé 200 comporte une étape 101 de positionnement d'un écarteur dans la bouche du patient en amont de l'étape 125 de reconstruction de la dentition dudit patient.

Dans des modes de réalisation particuliers, tel que celui représenté en figure 2, le procédé 200 comporte une étape de positionnement de miroirs dans la bouche du patient en amont de l'étape 125 de reconstruction de la dentition dudit patient.

L'étape 125 de reconstruction peut être réalisée par exemple, par un praticien mettant en œuvre un scanner intra-oral fournissant, au cours de l'utilisation, un modèle en trois dimensions de la dentition d'un patient. Ce scanner intra-oral réalise alors successivement :
- la deuxième étape 130 de capture d'au moins une image d'un objet représentatif de la dentition du patient et, optionnellement, d'au moins une valeur de profondeur entre un point de l'objet et le capteur,
- la deuxième étape 135 de calcul statistique de contours d'au moins une dent de la dentition en fonction d'au moins une image captée et
- la deuxième étape 140 de modélisation de la forme en trois dimensions d'au moins une dent en fonction de la position détectée d'au moins un ensemble de points.

Par scanner intra-oral, on entend à la fois le scanner et le dispositif électronique de calcul y étant relié et fournissant une modélisation de la forme d'au moins une partie de la dentition du patient. Le mode de fonctionnement d'un scanner intra-oral est bien connu de l'Homme du Métier des dispositifs médicaux à application dentaires et ce fonctionnement n'est pas repris ici.

Ainsi, l'utilisation d'un capteur d'images en trois dimensions est naturellement indiquée sur le plan technique pour faciliter la reconstruction dans un repère géométrique virtuel de la forme d'au moins une partie de la dentition d'un patient.

Toutefois, dans des variantes préférentielles, le choix d'un capteur d'images en deux dimensions est préféré en dépit de cette contre-indication technique, pour des raisons de coût et d'accessibilité du capteur notamment.

Dans ces variantes, la deuxième étape 130 de capture est réalisée, par exemple, par la mise en œuvre d'un capteur d'image. Ce capteur d'image est, par exemple, un appareil photographique ou une caméra de capture de vidéos. Tout capteur d'image connu de l'Homme du Métier peut être employé ici. Par exemple, l'utilisation d'un terminal mobile de poche muni d'un appareil photo permet la réalisation de cette étape 130 de capture. Dans des variantes, un capteur RGB-D, capable de capter à la fois la couleur et la profondeur de chaque pixel d'un objet photographié, est utilisé.

Préférentiellement, le capteur est positionné en face du visage du patient dont la dentition doit être reconstruite en trois dimensions.

Dans des variantes, une pluralité d'images est captée. Dans des variantes, au moins deux images captées sont captées selon un angle différent par rapport au visage du patient. Dans des variantes, au moins une partie d'une pluralité d'images est captée selon un arc de cercle entourant la dentition du patient.

Dans des variantes, le capteur capte uniquement des photographies. Dans des variantes, le capteur capte uniquement des vidéos. Dans des variantes, le capteur capte une combinaison de photographies et de vidéos.

La multiplication des angles de vue permet d'augmenter la fiabilité de la modélisation de la dentition en trois dimensions.

Dans des modes de réalisation particuliers, tel que celui représenté en figure 2, l'image captée au cours de l'étape 130 de capture d'au moins une image d'au moins une dent du patient est une image d'une empreinte des dents du patient.

Une telle empreinte est, par exemple, réalisée en silicone par le praticien.

La deuxième étape 135 de calcul est réalisée, par exemple, par la mise en œuvre d'un circuit électronique de calcul, tels un ordinateur ou un serveur, configuré pour, à partir d'au moins une image captée, détecter au moins une dent d'une dentition.

Cette deuxième étape 135 de calcul peut être basée sur un modèle statistique de formes en trois dimensions des dents. Un tel modèle est construit, par exemple, à partir d'un nombre important de scans en trois dimensions de dents. L'avantage d'une telle approche est qu'elle permet statistiquement modéliser les déformations des formes des dents et de les rendre paramétriques. Cela veut dire qu'il est possible de reproduire les formes de n'importe quelle dent en ajustant simplement les paramètres du modèle statistique de forme en trois dimensions.

Le même modèle statistique de formes en trois dimensions de dents construit peut être utilisé pour reconstruire des formes de dents à partir de scans en trois dimensions ou à partir de photographie des dents.

Dans le premier cas, les scans en trois dimensions de dents sont complets et l'ajustement du modèle statistique intègre moins de paramètres notamment la projection du modèle en deux dimensions correspondant aux silhouettes de dents par exemple. En revanche, dans le cas de l'utilisation de photographies de dents l'ajustement du modèle statistique de formes à partir de photographies nécessite en plus la prise en compte l'angle de prise de vue de la caméra et la visibilité des dents dans les photographies. L'ajustement des paramètres se base dans ce cas sur la comparaison de la projection du modèle ajusté par rapport à l'apparence des dents sur les photographies (notamment la silhouette des dents).

La réalisation d'un modèle de forme en trois dimensions de dents consiste à modéliser statistiquement la distribution des formes en trois dimensions des différentes dents.

La réalisation de ce modèle peut être basée sur les étapes de :
- segmentation manuelle des dents à partir de scan en trois dimensions de dents : chaque dent est détourée des autres dents et de la gencive et
- annotation de types de dents détourées.

De cette manière, une base est construite, dans laquelle on dispose pour chaque type de dents toutes les formes en trois dimensions extraites pour tous les patients dont la dentition a été captée.

De plus, la réalisation de ce modèle peut être basée sur une étape d'apprentissage statistique de modèle de forme de dents séparées : une fois la base assez importante de dents en trois dimensions annotées, les formes statistiques pour chaque type de dents peuvent être apprises. À cette fin, l'ensemble des dents en trois dimensions segmentées et de mêmes types sont placées dans un même repère. Autrement dit, ces dents segmentées sont superposées dans un référentiel qui est une sorte de modèle en trois dimensions générique de dent fait par un graphiste d'une manière appropriée à chaque type de dents. Cette superposition fait intervenir un placement rigide (translation et rotation en trois dimensions). La prise en compte des variations de formes en trois dimensions est faite dans l'étape suivante qui consiste à déformer les modèles génériques de dents pour approximer au mieux les formes en trois dimensions de dents. Il s'agit là d'un recalage déformable qui déplace la surface des modèles génériques pour les rapprocher le plus proche possible des vraies surfaces des dents segmentées sous une certaine contrainte géométrique. À la suite de cet enchaînement de recalage rigide et puis déformable des modèles génériques de dents, l'ensemble minimal de vecteurs de déformation couvrant l'ensemble des formes des dents présentes dans la base d'apprentissage est identifié. Cette estimation est faite par analyse en composantes principales de toutes les déformations réalisées précédemment au moment du recalage déformable. À la suite de cette analyse sont obtenus des vecteurs en trois dimensions de déformation d'un sous ensemble des points en trois dimensions qui composent les modèles génériques avec en plus d'une distribution de l'amplitude de déformation associée à chacun des vecteurs. Cela permet de reproduire l'ensemble des formes de dents en ajustant l'amplitude des vecteurs de déformation qu'on applique sur les modèles génériques de dents.

De plus, la réalisation de ce modèle peut être basée sur une étape de reconstruction en trois dimensions à partir d'un ensemble d'images. Cette étape consiste en le traitement qui permet d'inférer les formes en trois dimensions des dents à partir d'un ensemble d'images acquises pour les dents d'un patient sous différents angles et conditions. À l'entrée de cette étape, nous disposons du modèle statistique de formes en trois dimensions de dents qui doit être approximé pour correspondre aux dents visibles sur les photographies. Les dents ont une apparence particulière sur les photographies (manque de texture et beaucoup de réflectance). L'information la plus pertinente à considérer pour caractériser l'apparence des dents est l'information de contour des dents. De ce fait, cette étape se compose par exemple de deux sous-étapes :
- d'abord la détection probabiliste des contours des dents et
- par la suite vient l'approximation du modèle statistique de forme en trois dimensions aux contours de dents détectées.

La sous-étape de détection probabiliste des contours des dents, ne consiste pas en la détection un contour d'une manière binaire, mais plutôt en l'association à chaque point de contour un score ou une probabilité qui indique la vraisemblance de l'appartenance d'un point en question à un contour de dents donné. Cela veut dire aussi qu'il faut attribuer un faible score aux points contour qui ne sont pas liés aux dents.

Ceci ressemble à un problème de classification qui va associer à chaque pixel de l'image à l'entrée un score. Une base d'apprentissage peut être construite à cet effet par annotation manuelle. Dans ce cas, il faut disposer d'images de dents et y annoter manuellement les contours des dents. Les travaux de Piotr Dollar « Supervised Learning of Edges and Object Boundaries » peuvent ainsi être considérés au cours de cette étape.

La sous-étape d'approximation (« fitting », en anglais) consiste à ajuster d'une manière automatique tous les paramètres du modèle statistique de forme en trois dimensions de dents pour le faire correspondre aux dents du patient. Pour rappel, le modèle inclut à la fois des paramètres de formes et d'autres de positionnement des dents. Cette sous-étape répond à un problème d'optimisation numérique qui minimise la distance entre les contours détectés dans les images et les contours induits par la projection du modèle en trois dimensions déformé dans les images. En entrée de cette sous-étape, on dispose d'un nombre déterminé d'images. Cette approximation prend en compte d'une manière simultanée la projection du modèle de dents dans la totalité des images et trouver la meilleure combinaison de paramètres pour réaliser l'approximation.

Pour identifier une dent à partir d'au moins une image en deux dimensions, de manière automatique, un algorithme de traitement statistique d'images peut être mis en œuvre, cet algorithme étant configuré pour reconnaître un motif déterminé et associer, à ce motif, de manière statistique une forme de dent. Le mot statistique vient du fait de la modélisation des formes à partir d'un nombre important de données dans lequel on fait correspondre un modèle statistique sur un ensemble d'images. Dans ce modèle, les dents ne sont pas reconnues en tant que telles, mais plutôt des paramètres du modèle statistique sont modifiés pour les faire correspondre à l'apparence des dents dans les photos. Un tel modèle est construit, par exemple, à partir d'un nombre important de scans en trois dimensions de dents. L'avantage d'une telle approche est qu'elle permet statistiquement modéliser les déformations des formes des dents et de les rendre paramétriques. Cela veut dire que ce modèle permet de reproduire les formes de n'importe quelle dent en ajustant simplement les paramètres du modèle statistique de forme en trois dimensions.

Dans des variantes, au moins une image ainsi utilisée présente une information de profondeur associée à chaque pixel capté. Chaque telle image est captée, par exemple, par un capteur RGB-D.

Dans des variantes, au moins deux images en deux dimensions sont captées et une interpolation réalisée pour associer à un pixel représentatif d'une même partie du visage des coordonnées dans un repère géométrique virtuel, par triangulation par exemple.

La deuxième étape 140 de modélisation est réalisée, par exemple, par la mise en œuvre d'un circuit électronique de calcul, tel un ordinateur ou serveur, configuré pour, à partir des dents détectées, calculer une forme d'une dentition dans un repère géométrique virtuel.

Par exemple, au cours de cette étape 140 de modélisation, au moins une dent est positionnée selon le repère géométrique, la forme de la dentition étant extrapolée, ou interpolée, à partir des coordonnées de chaque dite dent.

Pour s'assurer de l'uniformité du repère géométrique des modélisations de la forme du visage et de la dentition, un des repères anatomiques détecté au cours de la première étape 115 de détection peut être une ou plusieurs des dents du patient, cette dent servant de point de référence lors de la deuxième étape 140 de modélisation de dents du patient pour l'intégration du modèle de dentition et du modèle de forme du visage dans un unique référentiel géométrique.

Dans des modes de réalisation particuliers, tel celui représenté en figure 2, le procédé 200 comporte une étape 210 d'apprentissage automatique de la reconnaissance d'une dent en fonction d'au moins une image captée, l'étape 135 de calcul étant réalisée en fonction de l'apprentissage automatique réalisé.

L'étape 210 d'apprentissage est réalisée, par exemple, par la mise en œuvre d'un algorithme d'apprentissage automatique (« machine learning » en anglais) sur la base d'un échantillon d'images captées ou d'ensemble de points extraits d'images captées représentant des dents déterminées.

Comme on le comprend, les étapes de reconstruction de la forme du visage 105 et de reconstruction de la dentition 125 peuvent être réalisées en parallèle ou successivement, tel que représenté en figure 2.

A l'issue de la réalisation de ces étapes de reconstruction de la forme du visage 105 et de reconstruction de la dentition 125, une étape d'assemblage 142 a lieu. Au cours de cette étape d'assemblage 142, les deux modèles reconstruits séparément sont assemblés dans le repère de référence.

Cette étape peut être basée sur le recalage en trois dimension du modèle de la dentition sur le modèle du visage en prenant comme référence des photos faciales où une partie de la dentition et totalité du visage sont visibles.

La deuxième étape 144 de capture d'une image de la forme du visage du patient est réalisée, par exemple, de manière analogue à l'une des variantes de réalisation de la première étape 110 de capture.

Le deuxième étape 146 d'approximation est réalisée, par exemple, de manière la première étape 120 d'approximation. Au cours de cette deuxième étape 146 d'approximation, on approxime par exemple la forme d'une partie inférieure du visage à associer avec une partie supérieure approximée au cours de l'étape 120 d'approximation.

L'étape 147 de positionnement est analogue à l'étape d'assemblage 142 en ce qu'elle consiste en un recalage en trois dimensions du modèle de visage approximé dans un repère comportant les parties rigides du visage, telles le front et le nez par exemple.

L'étape 145 de détermination d'au moins un plan de traitement dentaire est réalisée, par exemple, par la mise en œuvre d'un dispositif électronique de calcul configuré pour déterminer pour au moins une dent un plan de traitement possible. Un plan de traitement possible est déterminé en fonction du positionnement relatif de la dent par rapport à au moins une autre dent de la dentition ou par rapport la forme du visage.

Un « plan de traitement » est défini comme l'ensemble des changements à réaliser sur les dents (changements de forme, déplacement, rotation, etc.). Cela se traduit par l'ensemble des changements dans les paramètres des modèles des dents du patient.

Chaque plan de traitement présente un état initial, correspondant à l'état de la modélisation de la dentition du patient, et un état final, correspondant à une modélisation secondaire dans laquelle au moins une dent a subi un traitement, changeant ainsi à la fois la modélisation de la dentition et de la forme du visage.

De plus, chaque plan de traitement peut comporter un séquençage du plan de traitement individuel de chaque dent ayant un impact sur la forme du visage et de la dentition dépendant de la succession de traitements réalisés.

Cette étape 145 de détermination consiste à générer d'une manière automatique des plans de traitement d'orthodontie ou de prothèse tout en respectant des indicateurs esthétiques.

En effet cette étape 145 de détermination consiste à ajuster les paramètres du modèle en trois dimensions de dents obtenu au cours de l'étape 125 de reconstruction sous deux contraintes :
- premièrement il faut que les mouvements des dents soient réalistes et possibles dans le sens où le déplacement d'une dent est naturellement limité et contraint par le reste des dents du patient et
- deuxièmement le plan de traitement doit améliorer ou bien respecter les critères esthétiques du patient.

L'étape 150 de sélection, optionnelle, consiste en la sélection, via une interface homme-machine, d'un plan de traitement parmi au moins un plan de traitement déterminé au cours de l'étape 145 de détermination. Cette étape 150 de sélection peut consister, par exemple, en le fait de cliquer sur un bouton d'une interface numérique représentatif d'un plan de traitement, le clic déclenchant la sélection dudit plan de traitement.

Dans des modes de réalisation, l'étape 150 de sélection est aléatoire ou automatiquement réalisée.

La deuxième étape 144 de capture est réalisée de manière analogue à l'étape 110 de capture, c'est-à-dire à partir d'un capteur 2D ou 3D ou RGBD captant une image ou un flux d'images.

L'étape 155 de calcul d'une image est réalisée, par exemple, de manière analogue à la première étape 120 d'approximation et fonction du plan de traitement sélectionné et de l'impact de ce plan de traitement sur des paramètres de modélisation de la forme du visage du patient. Par exemple, la rotation d'une dent peut entraîner un déplacement d'une lèvre ou d'une joue.

L'étape 160 d'affichage est réalisée, par exemple, sur un écran numérique. Au cours de cette étape 160 d'affichage, une image intégralement calculée et virtuelle peut être affichée. Dans des variantes, une image basée sur l'intégration d'une partie virtuelle calculée dans une image fidèle, telle une photographie par exemple, peut être affichée.

Dans des modes de réalisation, tel que celui représenté en figure 2, l'étape 160 d'affichage est réalisée en réalité augmentée, le procédé comportant, en amont de l'étape d'affichage, une étape 295 de diminution d'une partie du visage d'un utilisateur capté dans un flux d'images.

L'étape 295 de diminution consiste à retirer du flux d'images une partie du visage de l'utilisateur correspondant à une partie à remplacer par une partie modélisée. Cette étape 295 de diminution est réalisée, par exemple, par la mise en œuvre d'un circuit électronique de calcul exécutant un programme informatique de traitement d'image configuré pour détecter une partie du visage à retirer et pour la retirer du flux d'image capté.

L'étape de calcul consiste à calculer une image du visage du patient, à partir du flux d'image capté et du visage du patient calculé après la réalisation du plan de traitement. Cette étape 295 de diminution est réalisée, par exemple, par la mise en œuvre d'un circuit électronique de calcul exécutant un programme informatique de calcul et de traitement d'image.

Au cours de cette étape 295 de diminution, la dentition réelle du patient est ôtée de l'image tout en conservant des textures réalistes de la bouche du patient. Schématiquement, les sous-étapes suivantes peuvent être réalisées :
- retrait des dents par traitement d'images,
- localisation et segmentation des dents par application d'un résultat obtenu par l'étape 210 d'apprentissage et
- remplissage de l'espace retiré par une texture déterminée par rapport à l'image de la dentition captée ou une texture prédéterminée.

Dans des modes de réalisation particuliers, tel que celui représenté en figure 2, le procédé 200 comporte une étape 225 de fourniture, en fonction du plan de traitement choisi, d'un calendrier d'actions à réaliser.

L'étape 225 de fourniture est réalisée, par exemple, par la mise en œuvre d'un écran affichant le calendrier d'actions du plan de traitement. Un calendrier d'actions associe à une étape du plan de traitement sélectionné ou déterminé une date.

Dans des variantes non représentées, le procédé 200 comporte une étape d'impression en trois dimensions d'une gouttière en fonction de la dentition modélisée au cours de l'étape 125 de reconstruction.

Depuis plus de dix ans, une nouvelle technique de traitement d'alignement de dents (traitement orthodontique) a vu le jour. Cette technique ne concerne plus le collage d'éléments de rétention mécanique sur les dents afin d'y mettre un fil contenant une information de mouvement. Cette technique repose sur l'utilisation d'une série de gouttières thermoformées, afin d'exercer des pressions sur les dents dans le but de les déplacer.

Actuellement, les séries de gouttières (entre 7 et 28 gouttières, en fonction des traitements) sont réalisées par thermoformage. C'est-à-dire, qu'une série de modèles sont réalisés, afin d'établir des positions dentaires intermédiaires, et que des plaques de plastique (d'environ 0.7 mm d'épaisseur) sont appliquées sur ces modèles, avant de les chauffer sous vide, afin qu'elles prennent la forme du modèle.

À ce jour, l'étape de réalisation des modèles intermédiaires est indispensable. Elle se fait, en grande majorité, par impression en trois dimensions.

Dans cette variante, il s'agit d'imprimer directement en trois dimensions les gouttières sans modèle intermédiaire. En résulterait une économie considérable de temps, et de matériaux. Cependant, les gouttières ne sont pas transparentes, sont cassantes, rigides et leurs propriétés mécaniques se dégradent rapidement dû à la température buccale ainsi qu'à la salive.

Pour éviter un tel problème, la variante évoquée met en œuvre une impression en trois dimensions en matériau biocompatible et apte à aller en bouche, capable de supporter le milieu intra-oral, étant préférentiellement esthétique, et être résistant en fine épaisseur.

Pour réaliser un tel matériau, un mélange de polymères est réalisé pour l'impression puis, l'ensemble est arrosé ou plongé dans un solvant pour pouvoir dégrader l'un des polymères, permettant ainsi d'en régler les propriétés mécaniques.

De ce fait, la technique devrait permettre l'impression de gouttière sans retouche (mis à part le lissage des bords).

## Revendications

1. Procédé (100, 200) d'estimation et de visualisation d'un résultat d'un plan de traitement dentaire, qui comporte :
- une étape (101) de positionnement d'écarteurs dans la bouche d'un patient ;
- une étape (105) de reconstruction, dans un premier espace virtuel en trois dimensions de la forme du visage du patient, comportant :
- une première (110) étape de capture, par un capteur RGB-D, d'au moins une image du visage du patient et
- une première étape (120) d'approximation de la forme d'au moins une partie du visage du patient par rapport à un modèle paramétrique de forme de visage en fonction d'au moins une image du visage captée,
- une étape (125) de reconstruction, dans un deuxième espace virtuel en trois dimensions, de la dentition d'un patient, comportant :
- une étape (130) de capture, par un capteur, d'une image de la dentition du patient,
- une étape (135) de calcul d'une carte probabiliste de contours d'au moins une dent de la dentition en fonction d'au moins une image captée et
- une étape (140) de modélisation de la forme en trois dimensions d'au moins une dent en fonction d'une position probable d'au moins un contours,
- une étape (142) d'assemblage de la forme du visage reconstruite et de la dentition reconstruite dans un espace virtuel en trois dimensions commun,
- une étape (143) de retrait des écarteurs de la bouche du patient,
- une deuxième étape (144) de capture d'une image de la forme du visage du patient,
- une deuxième étape (146) d'approximation de la forme du visage du patient par rapport à un modèle paramétrique de forme de visage en fonction d'au moins une image du visage captée au cours de la deuxième étape de capture, dans un espace en trois dimensions,
- une étape (147) de positionnement de la dentition modélisée dans l'espace virtuel en trois dimensions de la forme du visage approximée au cours de la deuxième étape d'approximation,
- une étape (145) de détermination d'au moins un plan de traitement dentaire en fonction à la fois de la dentition et de la forme du visage modélisés,
- une étape (150) de sélection d'un plan de traitement parmi l'ensemble des plans de traitement déterminés,
- une étape (155) de calcul d'une image du visage du patient post-traitement dentaire en fonction de l'image du visage du patient captée au cours de la deuxième étape de capture et du plan de traitement sélectionné et
- une étape (160) d'affichage de l'image calculée.

2. Procédé (200) selon la revendication 1, qui comporte une étape (205) d'apprentissage automatique de la reconnaissance d'un repère anatomique en fonction d'au moins une image captée, l'étape (115) de détection étant réalisée en fonction de l'apprentissage automatique réalisé.

3. Procédé (200) selon l'une des revendications 1 ou 2, qui comporte une étape (210) d'apprentissage automatique de la reconnaissance d'une dent en fonction d'au moins une image captée, l'étape (135) de détection étant réalisée en fonction de l'apprentissage automatique réalisé.

4. Procédé (200) selon la revendication 3, dans lequel l'étape (210) d'apprentissage automatique de la reconnaissance d'une dent est configurée pour réaliser un apprentissage d'une distribution statistique de formes de dent à partir de scans en trois dimensions captés de dents pour produire un modèle paramétrique de forme de dent.

5. Procédé (200) selon l'une des revendications 1 à 4, dans lequel l'étape (160) d'affichage est réalisée en réalité augmentée, le procédé comportant, en amont de l'étape d'affichage, une étape (295) de diminution d'une partie du visage d'un utilisateur capté dans un flux d'images.

6. Procédé (200) selon la revendication 5, dans lequel l'étape 295 de diminution comporte :
- une étape de retrait des dents par traitement d'images,
- une étape de localisation et de segmentation des dents par application d'un résultat obtenu par apprentissage automatique de la reconnaissance d'une dent et
- une étape de remplissage de l'espace retiré par une texture.

7. Procédé (200) selon l'une des revendications 1 à 6, dans lequel l'image captée au cours de l'étape (130) de capture d'au moins une image d'au moins une dent du patient est une image d'une empreinte des dents du patient.

8. Procédé (200) selon l'une des revendications 1 à 7, qui comporte une étape (225) de fourniture, en fonction du plan de traitement choisi, d'un calendrier d'actions à réaliser.

9. Procédé (200) selon l'une des revendications 1 à 8, dans lequel la deuxième étape (135) de détection est réalisée en fonction de l'approximation paramétrique de la forme d'une dent captée par rapport à une distribution de formes de dents obtenues préalablement.

10. Procédé (200) selon la revendication 9, dans lequel la deuxième étape (130) de capture capte au moins une image en deux dimensions d'une dent selon un angle de prise de vue, la deuxième étape (135) de détection réalisant l'approximation paramétrique de la forme d'une dent en selon une projection correspondant à l'angle de prise de vue.

11. Procédé (100, 200) selon l'une des revendications 1 à 10, qui comporte une pluralité d'étapes de capture (110, 130, 144), pour produire une pluralité d'images prises selon des angles de vue différents.

12. Procédé (100, 200) selon l'une des revendications 1 à 11, dans lequel au moins une étape de capture (110, 130, 144) est réalisée avec un capteur d'images en deux dimensions.

13. Procédé (100, 200) selon l'une des revendications 1 à 12, dans lequel l'étape (135) de calcul d'une carte probabiliste est réalisée à partir d'images captées en deux dimensions au cours de l'étape (130) de capture, la carte calculée étant calculée à partir d'une projection des dents dans une image captée.

## Patentansprüche

1. Verfahren (100, 200) zur Beurteilung und Visualisierung eines Ergebnisses eines zahnärztlichen Behandlungsplans, das umfasst:
- einen Schritt (101) des Positionierens von Retraktoren im Mund eines Patienten;
- einen Schritt der Rekonstruktion (105) der Gesichtsform des Patienten in einem ersten dreidimensionalen virtuellen Raum, aufweisend:
- einen ersten (110) Schritt des Erfassens durch einen RGB-D-Sensor mindestens eines Bildes des Gesichts des Patienten und
- einen ersten Schritt (120) des Annäherns der Form mindestens eines Teils des Gesichts des Patienten an ein parametrisches Gesichtsformmodell in Abhängigkeit von mindestens einem Bild des erfassten Gesichts,
- einen Schritt der Rekonstruktion (125) des Gebisses eines Patienten in einem zweiten dreidimensionalen virtuellen Raum, aufweisend:
- einen Schritt (130) des Erfassens durch einen Sensor eines Bildes des Gebisses des Patienten,
- einen Schritt (135) des Berechnens einer wahrscheinlichkeitsbasierten Karte von Konturen von mindestens einem Zahn des Gebisses in Abhängigkeit von mindestens einem erfassten Bild und
- einen Schritt (140) des Modellierens der dreidimensionalen Form von mindestens einem Zahn in Abhängigkeit von einer wahrscheinlichen Position von mindestens einer Kontur,
- einen Schritt (142) des Zusammensetzens der rekonstruierten Gesichtsform und des rekonstruierten Gebisses in einem gemeinsamen dreidimensionalen virtuellen Raum,
- einen Schritt (143) des Entfernens der Retraktoren aus dem Mund des Patienten,
- einen zweiten Schritt (144) des Erfassens eines Bildes von der Form des Gesichts des Patienten,
- ein zweiter Schritt (146) des Annäherns der Form des Gesichts des Patienten an ein parametrisches Gesichtsformmodell in Abhängigkeit von mindestens einem Bild des im zweiten Erfassungsschritt erfassten Gesichts in einem dreidimensionalen Raum,
- einen Schritt (147) des Positionierens des modellierten Gebisses im dreidimensionalen virtuellen Raum der im zweiten Annäherungsschritt angenäherten Gesichtsform,
- einen Schritt (145) des Bestimmens mindestens eines Zahnbehandlungsplans in Abhängigkeit sowohl vom modellierten Gebiss als auch von der modellierten Gesichtsform;
- einen Schritt (150) des Auswählens eines Behandlungsplans aus allen bestimmten Behandlungsplänen,
- einen Schritt (155) des Berechnens eines Bildes des Gesichts des Patienten nach der zahnärztlichen Behandlung in Abhängigkeit vom Bild des im zweiten Erfassungsschritt erfassten Gesichts des Patienten und vom ausgewählten Behandlungsplan und
- einen Schritt (160) des Anzeigens des berechneten Bildes.

2. Verfahren (200) nach Anspruch 1, das einen Schritt (205) des maschinellen Lernens der Erkennung eines anatomischen Bezugspunktes in Abhängigkeit von mindestens einem erfassten Bild umfasst, wobei der Detektionsschritt (115) in Abhängigkeit von dem durchgeführten maschinellen Lernen durchgeführt wird.

3. Verfahren (200) nach einem der Ansprüche 1 oder 2, das einen Schritt (210) des maschinellen Lernens der Erkennung eines Zahns in Abhängigkeit von mindestens einem erfassten Bild umfasst, wobei der Detektionsschritt (135) in Abhängigkeit von dem durchgeführten maschinellen Lernen durchgeführt wird.

4. Verfahren (200) nach Anspruch 3, wobei der Schritt (210) des maschinellen Lernens der Erkennung eines Zahns ausgelegt ist, um aus dreidimensionalen Scans, die von Zähnen erfasst wurden, um ein parametrisches Zahnformmodell zu erstellen, ein Erlernen einer statistischen Verteilung von Zahnformen durchzuführen.

5. Verfahren (200) nach einem der Ansprüche 1 bis 4, wobei der Anzeigeschritt (160) in Augmented Reality durchgeführt wird, wobei das Verfahren vor dem Anzeigeschritt einen Verkleinerungsschritt (295) eines Teils des in einem Bildstrom erfassten Gesichts eines Benutzers aufweist.

6. Verfahren (200) nach Anspruch 5, wobei der Verkleinerungsschritt (295) aufweist:
- einen Schritt des Entfernens der Zähne durch Bildverarbeitung,
- einen Schritt des Lokalisierens und Segmentierens der Zähne durch Anwendung eines Ergebnisses, das durch maschinelles Lernen der Erkennung eines Zahns erhalten wurde;
- einen Schritt des Füllens des entfernten Raums mit einer Textur.

7. Verfahren (200) nach einem der Ansprüche 1 bis 6, wobei das im Erfassungsschritt (130) erfasste Bild mindestens eines Bildes mindestens eines Zahns des Patienten ein Bild eines Abdrucks von den Zähnen des Patienten ist.

8. Verfahren (200) nach einem der Ansprüche 1 bis 7, das in Abhängigkeit vom gewählten Behandlungsplan einen Bereitstellungsschritt (225) eines Zeitplans für die durchzuführenden Maßnahmen umfasst.

9. Verfahren (200) nach einem der Ansprüche 1 bis 8, wobei der zweite Detektionsschritt (135) in Abhängigkeit von der parametrischen Annäherung der Form eines erfassten Zahns im Verhältnis zu einer zuvor erhaltenen Zahnformverteilung durchgeführt wird.

10. Verfahren (200) nach Anspruch 9, wobei der zweite Erfassungsschritt (130) mindestens ein zweidimensionales Bild eines Zahns aus einem Aufnahmewinkel erfasst, wobei der zweite Detektionsschritt (135) die parametrische Annäherung der Form eines Zahns gemäß einer Projektion durchführt, die dem Aufnahmewinkel entspricht.

11. Verfahren (100, 200) nach einem der Ansprüche 1 bis 10, das eine Vielzahl von Erfassungsschritten (110, 130, 144) zur Erzeugung einer Vielzahl von Bildern aus verschiedenen Aufnahmewinkeln aufweist.

12. Verfahren (100, 200) nach einem der Ansprüche 1 bis 11, wobei mindestens ein Erfassungsschritt (110, 130, 144) mit einem Bildsensor in zwei Dimensionen durchgeführt wird.

13. Verfahren (100, 200) nach einem der Ansprüche 1 bis 12, wobei der Berechnungsschritt (135) einer wahrscheinlichkeitsbasierten Karte ausgehend von Bildern, die während des Erfassungsschritts (130) in zwei Dimensionen erfasst wurden, durchgeführt wird, wobei die berechnete Karte ausgehend von einer Projektion der Zähne in einem erfassten Bild berechnet wird.

## Claims

1. Method (100, 200) of estimating and displaying a result of a dental treatment plan, which comprises:
- a step (101) of positioning retractors in a patient's mouth;
- a step (105) of reconstructing, in a first three-dimensional virtual space, the shape of the patient's face, comprising:
- a first step (110) of capturing, by an RGB-D sensor, at least one image of the patient's face, and
- a first step (120) of approximating the shape of at least one portion of the patient's face in relation to a parametric face shape model based on at least one captured image of the face;
- a step (125) of reconstructing, in a second three-dimensional virtual space, a patient's dentition, comprising:
- a step (130) of capturing, by a sensor, an image of the patient's dentition,
- a step (135) of calculating a probabilistic map of contours of at least one tooth of the dentition based on at least one captured image, and
- a step (140) of modelling the three-dimensional shape of at least one tooth based on a probable position of at least one contour;
- a step (142) of assembling the reconstructed shape of the face and the reconstructed dentition in a shared three-dimensional virtual space;
- a step (143) of removing the retractors from the patient's mouth;
- a second step (144) of capturing an image of the shape of the patient's face;
- a second step (146) of approximating, in a three-dimensional space, the shape of the patient's face in relation to a parametric face shape model based on at least one image of the face captured during the second capture step;
- a step (147) of positioning the modelled dentition in the three-dimensional virtual space of the face shape approximated during the second approximation step;
- a step (145) of determining at least one dental treatment plan based on both the dentition and face shape that have been modelled;
- a step (150) of selecting a dental treatment plan from among all the treatment plans determined;
- a step (155) of calculating an image of the patient's face after dental treatment, based on the image of the patient's face captured during the second capture step and the treatment plan selected; and
- a step (160) of displaying the image calculated.

2. Method (200) according to claim 1, which comprises a step (205) of automatically learning to recognise an anatomical locator based on at least one captured image, the detection step (115) being performed based on the automatic learning carried out.

3. Method (200) according to one of claims 1 or 2, which comprises a step (210) of automatically learning to recognise a tooth based on at least one captured image, the detection step (135) being performed based on the automatic learning carried out.

4. Method (200) according to claim 3, wherein the step (210) of automatically learning to recognise a tooth is configured to carry out learning of a statistical distribution of tooth shapes using captured three-dimensional scans of teeth to produce a parametric tooth shape model.

5. Method (200) according to one of claims 1 to 4, wherein the display step (160) is carried out in augmented reality, the method comprising, before the display step, a step (295) of reducing a portion of a user's face captured in an image stream.

6. Method (200) according to claim 5, wherein the reduction step 295 comprises:
- a step of removing teeth by image processing;
- a step of locating and segmenting teeth by applying a result obtained by the automatic learning to recognise a tooth; and
- a step of filling in the removed space by a texture.

7. Method (200) according to one of claims 1 to 6, wherein the image captured during the step (130) of capturing at least one image of at least one tooth of the patient is an image of an impression of the patient's teeth.

8. Method (200) according to one of claims 1 to 7, which comprises a step (225) of providing a timetable of actions to be carried out, in accordance with the chosen treatment plan.

9. Method (200) according to one of claims 1 to 8, wherein the second detection step (135) is performed based on the parametric approximation of the captured shape of a tooth in relation to a distribution of tooth shapes obtained previously.

10. Method (200) according to claim 9, wherein the second capture step (130) captures at least one two-dimensional image of a tooth according to one angle of view, the second detection step (135) carrying out the parametric approximation of the shape of a tooth along a projection corresponding to the angle of view.

11. Method (100, 200) according to one of claims 1 to 10, which comprises a plurality of capture steps (110, 130, 144), for producing a plurality of images taken from different angles of view.

12. Method (100, 200) according to one of claims 1 to 11, wherein at least one capture step (110, 130, 144) is carried out with a two-dimensional image sensor.

13. Method (100, 200) according to one of claims 1 to 12, wherein the step (135) of calculating a probabilistic map is carried out based on two-dimensional images captured during the capture step (130), the calculated map being calculated based on a projection of teeth in a captured image.
